# EUROPEAN PATENT SPECIFICATION

(11) **EP 0 687 809 B1**
(45) Date of publication and mention of the grant of the patent: **29.08.2001**
(21) Application number: 95304180.3
(22) Date of filing: 16.06.1995
(51) Int. Cl.: F02D 41/14, F02D 37/02, F02D 43/00

(54) **An output torque control apparatus and method for an internal combustion engine**
Ausgangsdrehmoment-Steuerungsvorrichtung und Verfahren für eine Brennkraftmaschine
Dispositif et méthode de commande du couple de sortie d'un moteur à combustion interne

(30) Priority: 25.07.1994 JP 17227594; 17.06.1994 JP 13523294
(43) Date of publication of application: 20.12.1995
(73) Proprietor: Hitachi, Ltd., Chiyoda-ku, Tokyo 101 (JP)
(72) Inventor: Minoiwa,Toshimichi, Naka-gun, Ibaraki 319-11 (JP); Kashiwaya, Mineo, Hitachinaka-shi, Ibaraki 312 (JP); Ozaki, Naoyuki, Hitachinaka-shi, Ibaraki 312 (JP); Amano, Matsuo, Hitachi-shi, Ibaraki 316 (JP); Ohnishi, Hiroshi, Hitachinaka-shi, Ibaraki 312 (JP)
(74) Representative: Molyneaux, Martyn William

(56) References cited:
- EP-A- 0 142 856
- EP-A- 0 239 095
- EP-A- 0 597 232
- DE-A- 4 109 561
- US-A- 4 616 621
- US-A- 5 144 932
- PATENT ABSTRACTS OF JAPAN vol. 018, no. 006 (M-1537), 7 January 1994 & JP 05 248281 A (JAPAN ELECTRON CONTROL SYST CO LTD), 24 September 1993,
- HITACHI REVIEW, vol. 35, no. 3, June 1986, pages 141-144, XP000605577 OHYAMA Y ET AL: "POWERTRAIN CONTROL SYSTEM FOR LEAN COMBUSTION ENGINES"

## Description

### FIELD OF THE INVENTION

The present invention relates to an output torque control apparatus and its method for an internal combustion engine of an automobile, and more particularly to an output torque control apparatus and its method for a lean burn internal combustion engine.

### BACKGROUND OF THE INVENTION

A lean burn internal combustion engine is an internal combustion engine in which an air fuel ratio or a ratio of an intake air amount (intake amount) to a fuel amount is larger than a theoretical air fuel ratio, that is, which is operated at a lean air fuel ratio wherein the intake amount is larger than the fuel amount. In controlling a conventional lean burn internal combustion engine, for example, as described in Japanese Unexamined Patent Publication No. 34329/1976, a method has been proposed in which its fuel cost is improved by controlling the air fuel ratio in accordance with the periodic variation of average pressure in a combustion chamber and increasing an operating region of lean burn. Further, as described in Japanese Unexamined Patent Publication No. 160530/1983, a method has been proposed in which an amount of exhaust gas recirculation, ignition timing and air fuel ratio are controlled in accordance with a variation in torque which is calculated by combustion pressure and the like.

However, in the air fuel ratio control increasing the operating region of lean burn aiming at the improvement of fuel cost, the function of reducing a poisonous component of exhaust gas, or emission amount of a nitrogen oxide component (hereinafter referred to as NOx) is not considered and therefore, the control of a lean burn internal combustion engine is incomplete. Further, it is not complete since the fuel cost, the function of reducing a poisonous component in exhaust gas and the operational performance are deteriorated in comparison with those in their initial states due to aging of component parts of the lean burn internal combustion engine and component parts of a control device.

Further, the lean burn air fuel ratio is switched to the theoretical air fuel ratio when much output is required since the output is insufficient in the lean burn state in comparison with the combustion state at the theoretical air fuel ratio. However, in switching the air fuel ratio, the fuel amount is changed while the intake amount remains constant and therefore, the output torque is abruptly changed causing shock or strange feeling to a driver.

### SUMMARY OF THE INVENTION

It is an object of the present invention to provide an output torque control apparatus and its method for a lean burn internal combustion engine in consideration of the above-mentioned aging, without deteriorating the fuel cost, the function of reducing the poisonous component of exhaust gas and the operational performance whereby no stepwise change of torque or shock is caused even if the air fuel ratio is changed.

According to first and second aspects of this invention there is provided an apparatus as claimed in claim 1 and a method as claimed in claim 11 herein.

In a preferred embodiment, the present invention includes a target air fuel ratio data calculating means for calculating target air fuel ratio data by the intake amount of a lean burn internal combustion engine, a push angle of an accelerator of an automobile and a rotation number of the engine, a torque detecting means for detecting an output torque showing an operational state of the lean burn internal combustion engine, a lean burn limit determining means for determining a limit region of lean burn in accordance with change of the output torque, air fuel ratio detecting means for detecting an air fuel ratio of a lean burn internal combustion engine, a NOx emission amount limit air fuel ratio determining means for determining a limit air fuel ratio corresponding to a predetermined limit value of NOx emission amount by using the air fuel ratio, an air fuel ratio correcting means for outputting a corrected air fuel ratio value corresponding to a lean burn limit which has been determined by the above-mentioned lean burn limit determining means, a target air fuel ratio data changing means for rewriting and changing a target air fuel ratio data in accordance with the corrected air fuel ratio from the air fuel ratio correcting means and the corrected air fuel ratio from the NOx emissions amount limit air fuel ratio determining means, a target air fuel ratio data storing means for storing the target air fuel ratio data used for calculating a fuel amount, a fuel amount calculating means for calculating the fuel amount by using the target air fuel ratio data and the corrected air fuel ratio and a fuel injection valve for supplying the lean burn internal combustion engine with the fuel amount which has been calculated by the fuel amount calculating means.

Under the above-mentioned construction, a limit NOx emission amount is determined by using the air fuel ratio obtained from the air fuel ratio detecting means and the air fuel ratio is controlled to that of a theoretical mixture (air fuel ratio = 14.7) when the lean burn operation becomes difficult in view of the NOx emission amount to thereby maintain the emission control function. Further, the output torque of an internal combustion engine can be prevented from changing and the torque can be prevented from varying by adding a torque correction performed by controlling the air amount so as to adapt to the air fuel ratio control in which improvement of fuel cost by the lean burn limit control and maintaining the emission control function by determining the limit NOx emission a mount are compatible with each other.

Another embodiment of the present invention includes a normal state time fuel amount calculating means for calculating the fuel amount from the engine rotation number and an accelerator push angle in operating the engine at lean burn or at the theoretical air fuel ratio, and an air fuel ratio switch time fuel amount calculating means for calculating the fuel amount adjusted to restrain stepwise torque change or shock in switching the air fuel ratio from the engine rotation number and the accelerator push angle when the state of the engine is switched from either one of the above two combustion states to the other combustion state.

Further, still another embodiment of the present invention includes the normal state time intake amount calculating means for calculating the intake amount from the engine rotation number and the accelerator push angle in operating the engine at lean burn or at the theoretical air fuel ratio, and an air fuel ratio switch time air amount calculating means for calculating an air amount adjusted to restrain stepwise torque change or shock in switching the air fuel ratio from the engine rotation number and the accelerator push angle when the state of the engine is switched from either one of the above two combustion states to the other combustion state.

Under the above construction, the engine is controlled such that the fuel amount of the intake amount is changed in switching the air fuel ratio by which the stepwise torque change is alleviated and therefore, shock or strange feeling caused by the stepwise torque change in switching the air fuel ratio can be alleviated.

### BRIEF DESCRIPTION OF THE DRAWINGS

Figure 1 is a structural view of a power train system of an automobile;
Figure 2 is block diagram showing outline of controlling an output torque of an engine;
Figure 3 is a block diagram showing a specific embodiment of controlling an output torque of an engine;
Figure 4 is a flow chart of the control shown in Figure 3;
Figure 5 is a flow chart of the control shown in Figure 3;
Figure 6 is a flow chart of the control shown in Figure 3;
Figure 7 is a view of an operational characteristic showing a relationship between an air fuel ratio and a NOx emission amount;
Figure 8 is a block diagram showing outline of a control to which a control of air amount is added;
Figure 9 is a flow chart of the control shown in Figure 8;
Figure 10 is a conceptual view of control showing maps of basic control of a lean burn internal combustion engine;
Figure 11 is a block diagram showing outline of a control to which a control of ignition timing is added;
Figure 12 is a flow chart of the control shown in Figure 11;
Figure 13 is a flow chart of the control shown in Figure 11;
Figure 14 is a block diagram showing a control of preventing shock caused by a change in an air fuel ratio;
Figure 15 illustrates time charts for explaining the control of Figure 14;
Figure 16 is a block diagram showing structure of a control
Figure 17 is a graph showing a relationship between an air fuel ratio and a fuel amount;
Figure 18 is a graph showing a relationship between an air fuel ratio and a NOx emission amount;
Figure 19 illustrates time charts showing change of an output torque of an engine;
Figure 20 illustrates time charts showing change of an output of an engine;
Figure 21 is a flow chart of calculation performed by an air fuel ratio switch time fuel injection amount calculating means;
Figure 22 is a flow chart of calculation performed by a normal state time fuel injection amount calculating means;
Figure 23 is a flow chart of calculation performed by an air fuel ratio switch time throttle opening degree calculating means;
Figure 24 is a flow chart of calculation performed by a normal state time throttle opening degree calculating means;
Figure 25 is a flow chart of calculation performed by an air fuel ratio switch time detecting means;
Figure 26 is a flow chart of calculation performed by a fuel injection amount calculation value selecting means; and
Figure 27 is a flow chart of calculation performed by a throttle opening degree calculation value selecting means.

### DETAILED DESCRIPTION OF THE PREFERRED EMBODIMENTS

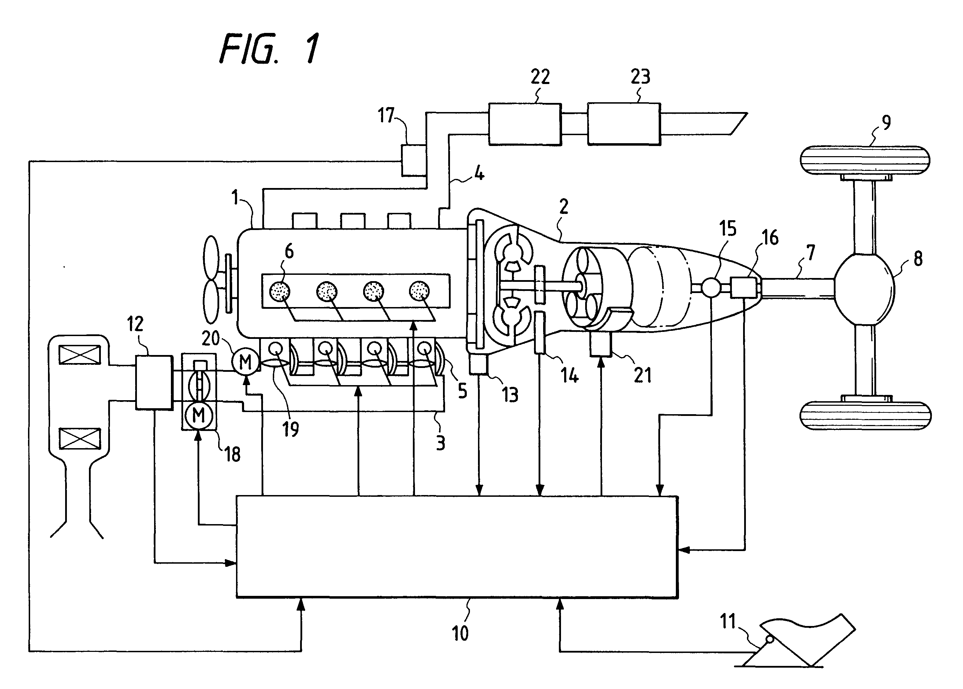

A first embodiment of the present invention is shown in Figure 1 through Figure 7.

Figure 1 is a structural view of a system. Attached to an engine 1 are a change gear 2, an intake pipe 3, an exhaust pipe 4, fuel injection valves 5 and ignition plugs 6. Intake air flowing into the engine after passing through the intake pipe 3 and fuel injected from the fuel injection valves 5 are mixed into a mixture which is combusted by being ignited by the ignition plugs 6 and a change of pressure in the combustion is converted into a rotational motion to thereby form an output. The change gear 2 reduces the speed of the rotational motion and transmits it to a drive shaft 7 of an automobile. The rotational motion of the drive shaft 7 is transmitted to wheels 9 via a differential gear 8 whereby the automobile can run on roads. The engine 1 and the change gear 2 are electrically connected to a control unit 10 and signals are sent and received therebetween. Input signals to the control unit 10 are sent from an accelerator push angle sensor 11, an intake amount sensor 12, an input shaft rotation sensor 13 attached to an input shaft of a torque converter in the change gear 2 for measuring an engine rotation number, an output shaft rotation sensor 14 attached to an output shaft of the torque converter, an output shaft rotation sensor 15 attached to an output shaft of the change gear 2 connected to the driver shaft 7, a torque sensor 16 and an oxygen sensor 17 attached to the exhaust pipe 4. Output signals are sent from the control unit 10 to a throttle control device 18 for adjusting intake air amount in the intake pipe 3, a drive motor 20 for driving swirl shunt valves 19 each generating a swirl flow in the intake air to accelerate combustion, the fuel injection valves 5, the ignition plugs 6 and a speed change controlling actuator 21 each of which is controlled by each of the output signals. The oxygen sensor 17 can find the air fuel ratio by measuring oxygen concentration in the exhaust gas and therefore, it can be used as an air fuel ratio sensor. Further, a three way catalyst 22 and a NOx reduction catalyst 23 are installed to the exhaust gas 4 to purify the exhaust gas.

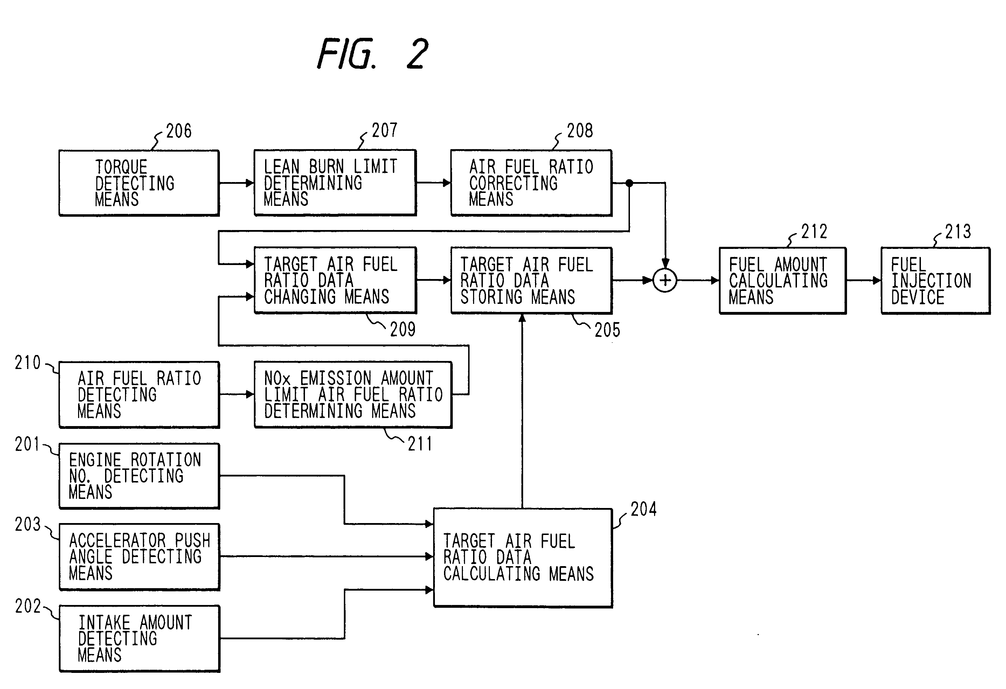

Figure 2 is a block diagram showing outline of control of an output torque of the engine 1. A target air fuel ratio data calculating means 204 calculates target air fuel ratio data from data sent from an engine rotation number detecting means 201, an intake air amount detecting means 202 and an accelerator push angle detecting means 203 and sends it to a target air fuel ratio data storing means 205. Meanwhile, a torque detecting means 206 detects a torque showing an operational state of the engine 1, a lean burn limit determining means 207 determines a limit of lean burn while detecting a change of the torque, an air fuel ratio correcting means 208 calculates a corrected value of the air fuel ratio corresponding to the determined limit of lean burn and sends it to a target air fuel ratio data changing means 209. Further, a NOx emission amount limit air fuel ratio determining means 211 determines a limit air fuel ratio having less the NOx emission amount in accordance with the air fuel ratio detected by an air fuel ratio detecting means 210 and sends the corrected value of the air fuel ratio corresponding thereto to the target air fuel ratio data changing means 209. The target air fuel ratio data changing means 209 rewrites and changes the target air fuel ratio data stored in the target air fuel ratio data storing means 205 in accordance with the corrected value of the air fuel ratio from the air fuel ratio correcting means 208 and the limit air fuel ratio determining means 211. Next, the rewritten target air fuel ratio data is again corrected by the correction value from the air fuel ratio correcting means 208 and sent to a fuel amount calculating means 212. The fuel amount calculating means 212 calculates a fuel amount based on the sent target air fuel ratio data and sends the data of the fuel amount to a fuel injection device 213 whereby the fuel amount in accordance with the value of the calculated target air fuel ratio data is supplied to the engine 1. In this way, the actual lean burn limit air fuel ratio is compared with the NOx emission amount limit air fuel ratio and the target air fuel ratio is set based on the determination. Therefore, it is possible to attain the air fuel ratio control capable of coping with aging of mechanical devices or the like and the fuel cost reduction and the exhaust gas purification can be compatible with each other.

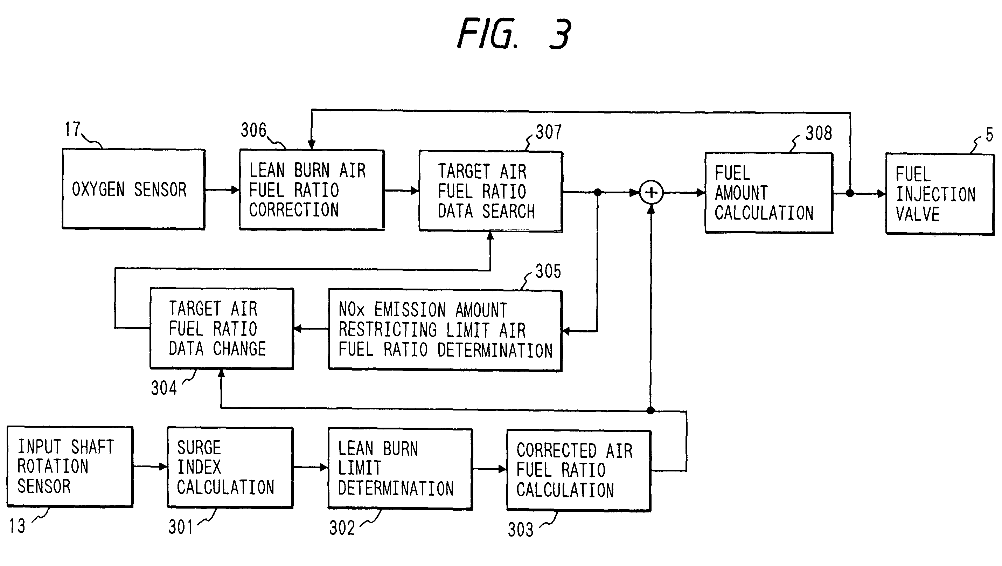

Figure 3 is a block diagram showing a specific embodiment of control of an output torque of an engine. Existing sensors are used here in view of their cost and mounting performance. Torque variation in the vicinity of a lean burn limit is detected by calculating a surge index through a change rate of the engine rotation number in step 301 and determining the lean burn limit in step 302. Next, the operation calculates a corrected air fuel ratio in accordance with the result of determining the lean burn limit in step 303. Meanwhile, the operation detects the oxygen amount very accurately by using the oxygen sensor 17 by which the air fuel ratio is predicted. That is, in step 306 the operation learns the target air fuel ratio data when the target air fuel ratio becomes the theoretical air fuel ratio (air/fuel = 14.7) and corrects the air fuel ratio in lean burn by the result of learning the theoretical air fuel ratio. In step 307, the operation searches the target air fuel ratio data from the target air fuel ratio data storing means 205 shown in Figure 2, calculates the fuel amount and outputs the data to the fuel injection valve 5 in step 308. In this case, the operation adds the corrected air fuel ratio calculated in step 303 to the target air fuel ratio searched in step 307 to thereby correct the target air fuel ratio. Further, the operation determines whether or not the target air fuel ratio data searched in step 307 is equal to the NOx emission amount limit air fuel ratio in step 305. When it is equal to the NOx emission amount limit air fuel ratio, the operation changes in step 304 the target air fuel ratio data searched in step 307 by the corrected air fuel ratio sent from step 303.

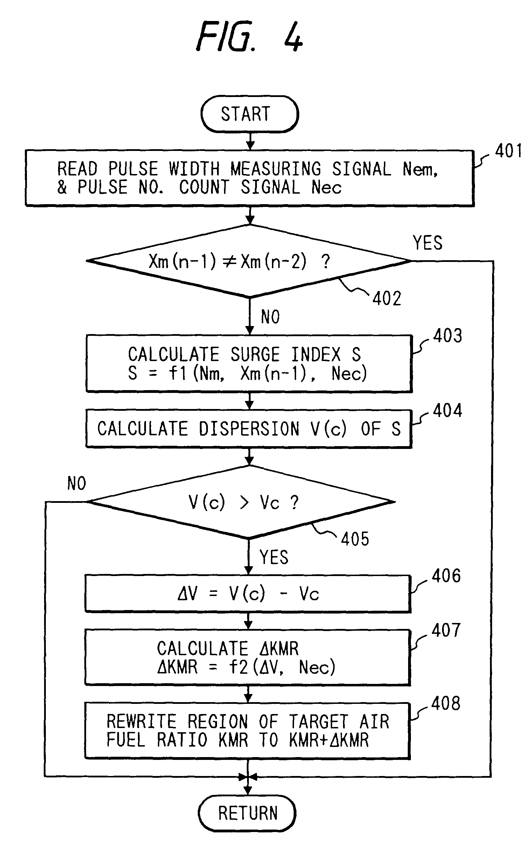

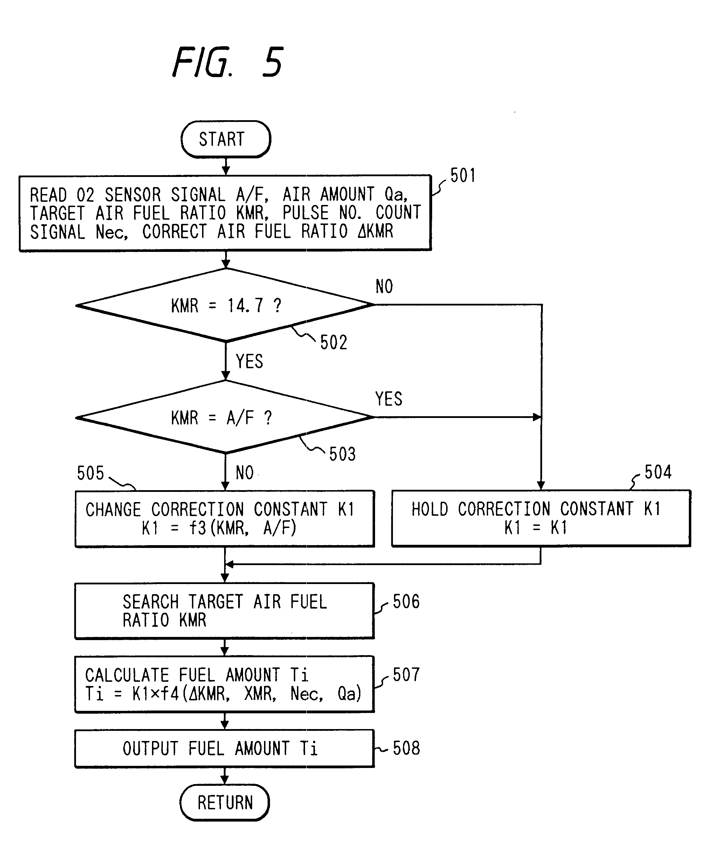

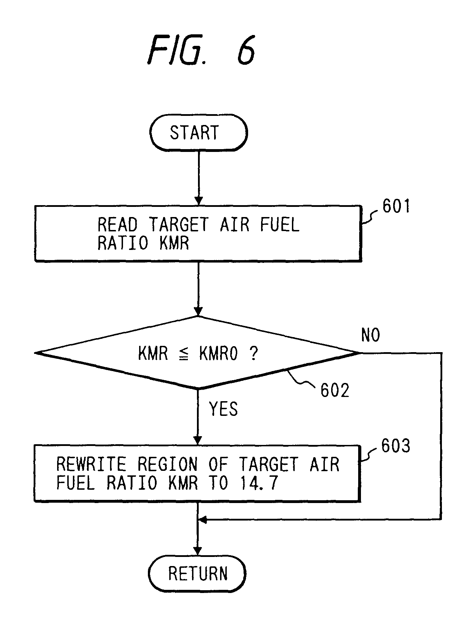

Figure 4 through Figure 6 show flow charts of the control shown in Figure 3. Figure 4 is a flow chart showing the control of steps 301 through 304 in Figure 3. Firstly, in step 401 the operation reads signals Nem and Nec using two systems of pulse width measuring and pulse number counting to accurately detect the engine rotation number. Next, in step 402, the operation determines whether the present operating state is in a normal state or not. Xm(n-1) and Xm(n-2) respectively designate the pulse width measuring signals averaged by the pulse number count value of the preceding measurement and one before the preceding measurement. When Xm(n-1) and Xm(n-2) are different, the operation proceeds to RETURN and when they are equal, the operation proceeds to step 403. Instep 403 the operation calculates a surge index S that is the basis of torque variation from a function f1 of Nem, Nec and Xm(n-1). Further, in step 404 the operation calculates a dispersion V (c) of the surge index S. This V(c) corresponds to the torque. In step 405 the operation determines whether the dispersion V(c) is larger than a predetermined torque variation limit value VL. When V(c) △≦ VL, the operation determines that there is no torque variation and proceeds to RETURN. When V(c) > VL, the operation regards that there is a torque variation, proceeds to step 406 and calculates a difference Δ V between V(c) and VL. Further, in step 407 the operation calculates a corrected air fuel ratio Δ KMR by using a function f2 of Δ V and Nec, rewrites the data of the target air fuel ratio KMR to KMR + Δ KMR in step 408 and proceeds to RETURN. Figure 5 is a flow chart showing the control from step 306 to step 308 in Figure 3. First, in step 501 the operation reads an oxygen sensor signal A/F, an air amount Qa, the above-mentioned KMR and Nec. Next, in step 502, the operation determines whether KMR is 14.7 (theoretical air fuel ratio). Here, it is necessary to predict with high accuracy the actual air fuel ratio in the lean burn region by using the oxygen sensor. Therefore, the operation corrects the target air fuel ratio data in the state of the air fuel ratio of 14.7 which can be detected by the oxygen sensor. When the determination is Yes in step 502, the operation proceeds to step 503 and determines whether the target air fuel ratio KMR is equal to the actual air fuel ratio A/F. When they are equal, the operation proceeds to step 504 and holds a correction constant k1 at the previous calculation. When they are not equal, the operation proceeds to step 505 and calculates the correction constat k1 from a function f3 of KMR and A/F to change it. Further, the operation proceeds to step 506 and searches the data table of the target air fuel ratio KMR. Next, in step 507 the operation calculates a fuel amount Ti by multiplying a function f4 of Δ KMR, KMR, Nec and Qa by kl and outputs it in step 508. When the determination is No in step 502, the operation proceeds to step 504 because the air fuel ratio cannot be corrected. Figure 6 is a flow chart of the control in steps 304 and 305 in Figure 3. First, the operation reads the air fuel ratio KMR in step 601 and proceeds to step 602. In step 602 the operation determines whether the target air fuel ratio KMR is equal to or less than a NOx emission amount limit air fuel ratio KMR0. The value of KRM0 is previously set as, for example, 22. When the determination is No, the operation proceeds to RETURN. When it is Yes, the operation proceeds to step 603 and rewrites the data table of the target air fuel ratio KMR to 14.7 to prevent an increase in the emission amount of NOx.

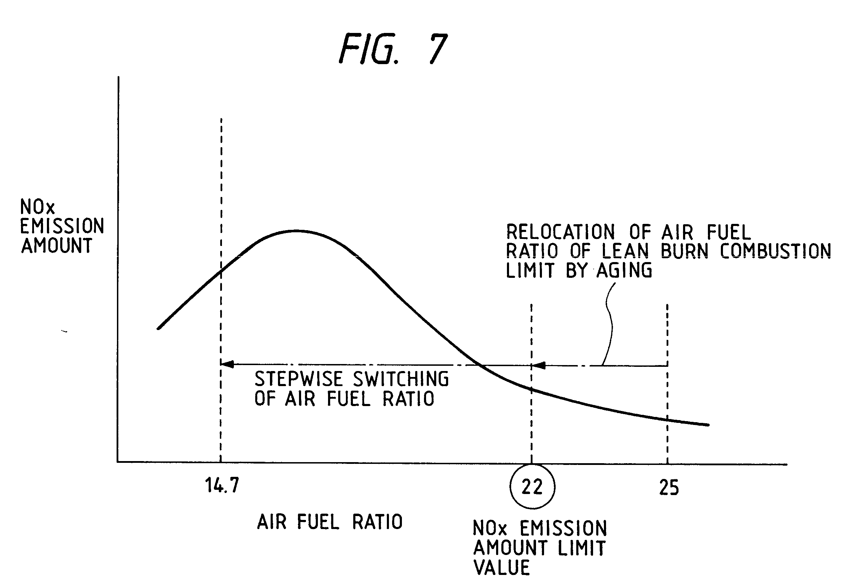

Figure 7 is a view of an operational characteristic showing a relationship between the air fuel ratio and the emission amount of NOx in the control according to the first embodiment of the present invention. For example, suppose that the air fuel ratio of a lean burn engine is set to 25 when it is new. Thereafter, the lean burn limit air fuel ratio has to be gradually reduced to less than 25 by aging. As shown in Figure 7, the smaller the air fuel ratio becomes from 25, the more the emission amount of NOx increases. Therefore, the air fuel ratio is stepwisely changed to the theoretical air fuel ratio of 14.7 when it is 22 to prevent the amount of NOx from the increasing. Thereby, the fuel cost reduction and exhaust gas purification can be compatible with each other.

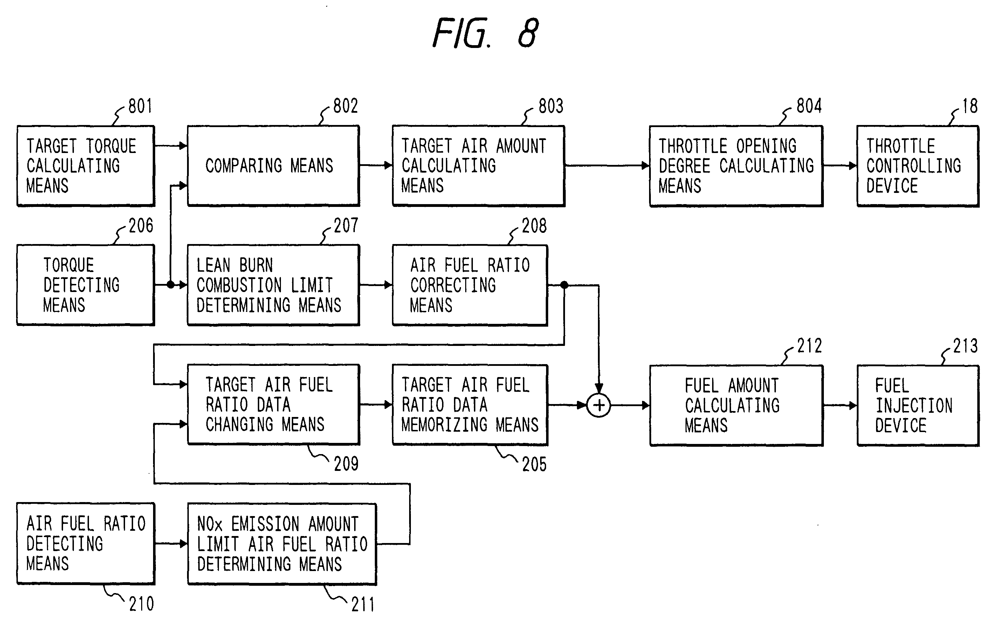

Figures 8 through 10 show a second embodiment of the present invention. Figure 8 is a block diagram showing outline of a control in case where a control of an air amount is added to the control of the first embodiment shown in Figure 2. Portions the same as those in Figure 2 are attached with the same notations. In the method of controlling only the fuel amount shown in the first embodiment, the torque variation due to the change of the air fuel ratio cannot completely be restrained and therefore, the correction of the torque to which the control of an air amount is added is indispensable. First, the operation calculates a torque required by a driver by a target torque calculating means 801. The operation inputs the target torque and the actual torque detected by the torque detecting means 206 into a comparing means 802 and compares both. The operation calculates a target air amount from a deviation calculated in the comparing means 802 by a target air amount calculating means 803. The operation calculates a target throttle opening degree by a throttle opening degree calculating means 804 and outputs control data to the throttle controlling device 18. As examples of the throttle controlling device 18, there are an electronic control throttle valve in which the throttle valve is opened and closed by driving a motor, an idling speed controlling device, a supercharger and a variable valve timing controlling device etc.

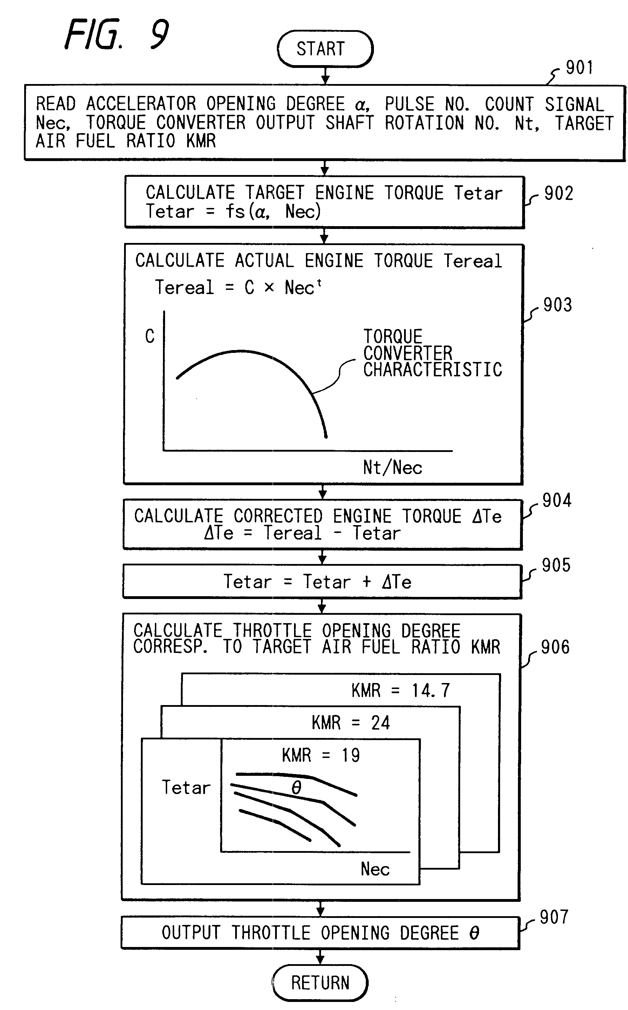

Figure 9 is a flow chart of the control shown in Figure 8. First, the operation reads an accelerator opening degree, the pulse number count signal Nec, a rotation number Nt of the output shaft of the torque converter and the target air fuel ratio KMR. Further, the operation proceeds to step 902 and calculates a target engine torque Tetar required by a driver using a function f5 of * and Nec. Next, the operation proceeds to step 903 and calculates an actual engine torque Tereal by using the characteristic of the torque converter. Using the characteristic of the torque converter, Tereal can be calculated by multiplying square of Nec by a pump capacity coefficient c that is a function of Nt and Nec. Further, the operation calculates a corrected engine torque Δ Te in step 904 by using the results in steps 902 and 903 and corrects the target engine torque Tetar in step 905. In step 906 the operation searches data tables of Tetar and Nec for every target air fuel ratio KMR and calculates a target throttle opening degree . Further, the operation outputs the throttle opening degree in step 907. Further, although the operation has used the search of data tables in calculating the throttle opening degree, the calculation may be performed by forming a model constructed by equations in place of the data tables. Further, with regard to detection of the actual engine torque, it is possible to use an actual torque sensor attached to the drive shaft, a combustion pressure sensor directly detecting the pressure in cylinders of internal combustion engine, and rotation sensors detecting a difference in rotation (torsion) attached to the front and the end of the drive shaft.

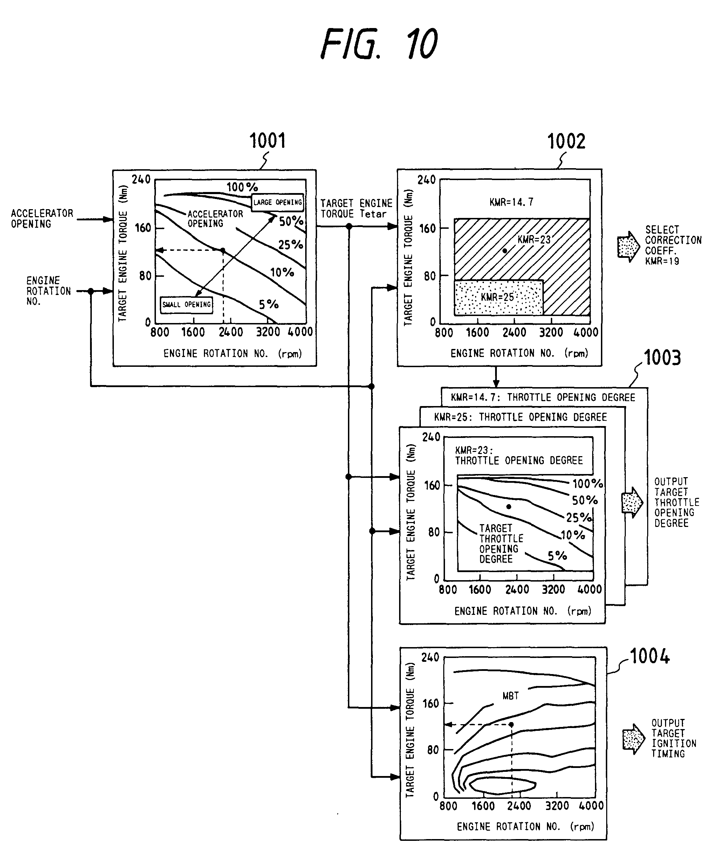

Figures 10 through 13 show a third embodiment of the present invention.

Figure 10 is a conceptual view showing maps of a basic control of a lean burn internal combustion engine in which a control of an ignition timing is added to the above embodiments. All the system the target engine torque of an internal combustion engine is made to be a reference. In a map 1001, characteristics of the engine torque, the engine rotation number and the throttle opening degree are used at the air fuel ratio of 14.7. That is, when the characteristics are used as the target, the operating characteristic of a conventional internal combustion engine which is not of a lean burn type can be satisfied. Here, the accelerator opening degree is inputted in place of the throttle opening degree and the engine rotation number is inputted thereto. Further, to satisfy the torque required by a driver the actual engine torque is rendered the target engine torque which is outputted. The fuel amount, the air amount and the ignition timing are determined by using the target engine torque and the engine rotation number. First, with regard to the fuel amount, there may be a case where misfire is caused depending on an operating region, for example, in lean mixture and there may be a case where the mixture cannot be made lean considering the output at high rotation and high load of the engine. Accordingly, as shown in a map 1002, the region of the air fuel ratio have to be classified. Here, the air fuel ratio of 23 is selected. Next, in a map 1003 the air fuel ratio of 23, the target engine torque and the engine rotation number are inputted and the target throttle opening degree specified by every air fuel ratio is selected and outputted. Finally, in a map 1004 the target ignition timing is selected and outputted from the target engine torque and the target engine rotation number. A value of MBT (Minimum Advance of the Best Torque) is set to the ignition timing.

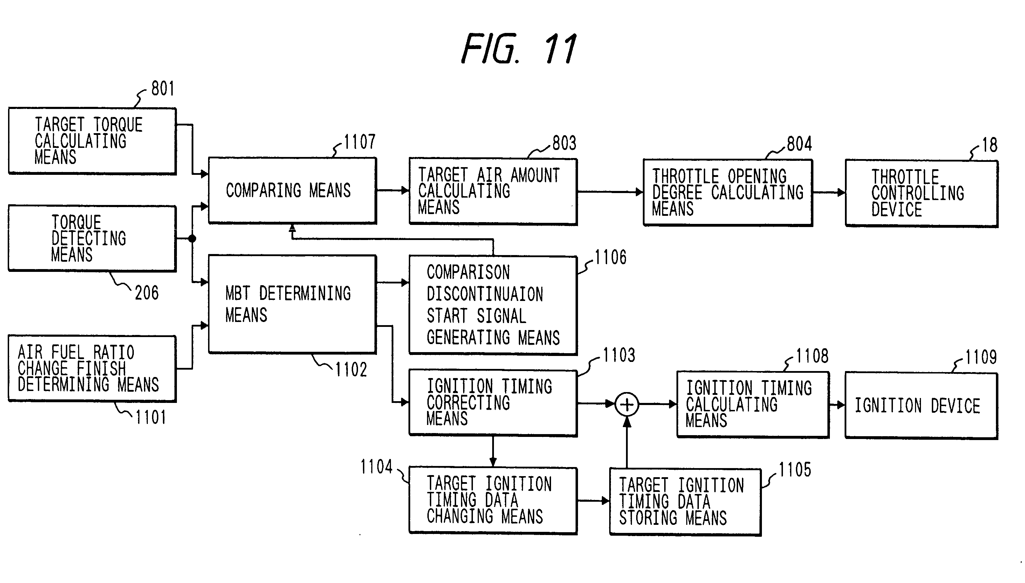

Figure 11 is a block diagram showing outline of a control to which control of ignition timing is added. First, a signal of an air fuel ratio data change finish determining means 1101 for determining whether the change of the air fuel ratio data has been finished and a signal of the torque detecting means 206 for detecting the state of the torque of the output shaft are inputted to a MBT determining means 1102. In the MBT determining means 1002, the operation detects the state of torque in controlling the ignition timing explained as follows by which the MBT is determined. Further, in an ignition timing correcting means 1003,the operation corrects the ignition timing in accordance with the state of torque determined by the MBT determining means 1002. Further, the operation changes a value of a target ignition timing data storing means 1105 by using a target ignition timing data changing means 1104 in accordance with the result of correction. In a comparison discontinuation start signal generating means 1106 the operation generates a signal of comparison discontinuation to a comparing means 1107 such that the throttle opening degree is not changed, to find the ignition timing of the MBT. The operation calculates the ignition timing by an ignition timing calculating means 1108 using data of the ignition timing correcting means 1103 and the target ignition timing data storing means 1105 and outputs it to an ignition device 1109 such as the ignition plug 6 shown in Figure 1. When the operation determines in the MBT determining means 1102 that the ignition timing becomes the value for the MBT, the operation outputs a signal of comparison start from the comparison discontinuation start signal generating means 1106 to the comparing means 1107 and allows the throttle control. The throttle control in correspondence with the torque change due to the ignition timing control is similar to the content described in Figure 8.

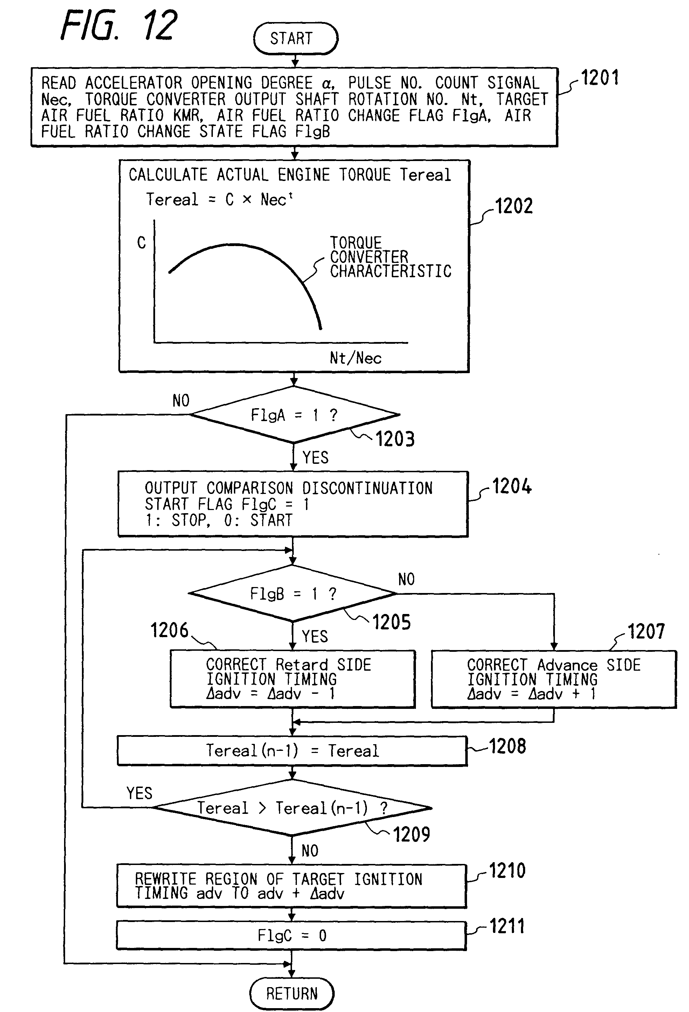

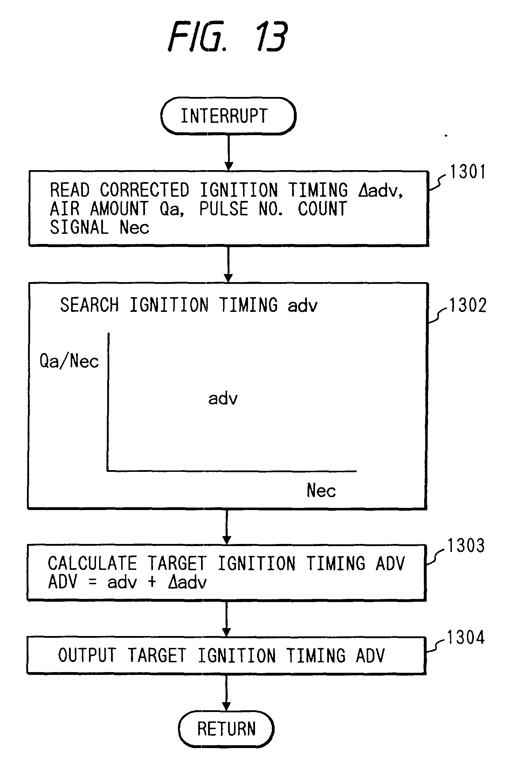

Figure 12 and Figure 13 are flow charts of the control shown in Figure 11. In Figure 12, first, in step 1201, the operation reads the accelerator opening degree *, the pulse number count signal Nec, the rotation number Nt of the output shaft of the torque converter, the target air fuel ratio KMR, an air fuel ratio change flag FlgA and an air fuel ratio change state flag FlgB. The operation proceeds to step 1202 and calculates the actual engine torque Tereal by using the characteristic of the torque converter. The method of calculation is similar to the description of Figure 9. Next, the operation determines whether FlgA is 1 in step 1203. When it is 1, it shows that the change of the air fuel ratio data has been finished. Then the operation proceeds to step 1204 and carries out the MBT control. When it is other than 1, the operation proceeds to RETURN. In step 1204, the operation outputs 1 to a comparison discontinuation start flag FlgC for stopping a correction by the throttle control (or air amount control) . Further, the operation proceeds to step 1205 and determines whether the air fuel ratio changes to the side of a rich air fuel ratio or that of a lean air fuel ratio by FlgB, proceeds to step 1206 in case of the rich air fuel ratio and proceeds to step 1207 in case of the lean air fuel ratio. In either case, the MBT is detected, for example, by subtracting or adding the amount by every 1 degree of a crank angle. Further, the operation proceeds to step 1208, inputs the actual engine torque Tereal of this time to the actual engine torque Tereal(n-1) of the preceding time and proceeds to step 1209. In step 1209, the operation detects the change of the engine torque caused by changing the ignition timing and feeds it back. In step 1209, when Treal is equal to Treal(n-1), the operation proceeds to step 1210, rewrites the region of the target ignition timing adv to a value of adv + Δ adv, writes 0 to the comparison discontinuation start flag FlgC in step 1211 and proceeds to RETURN.

Figure 13 is a flow chart of the ignition timing control by interruption. In step 1301 the operation reads the corrected ignition timing Δ adv, the air amount Qa and the pulse number count signal Nec. In step 1302, the operation searches the data table of the ignition timing adv and calculates the target ignition timing ADV by the above-mentioned adv and Δ adv in step 1303. Further, the operation outputs the target ignition timing ADV in step 1304.

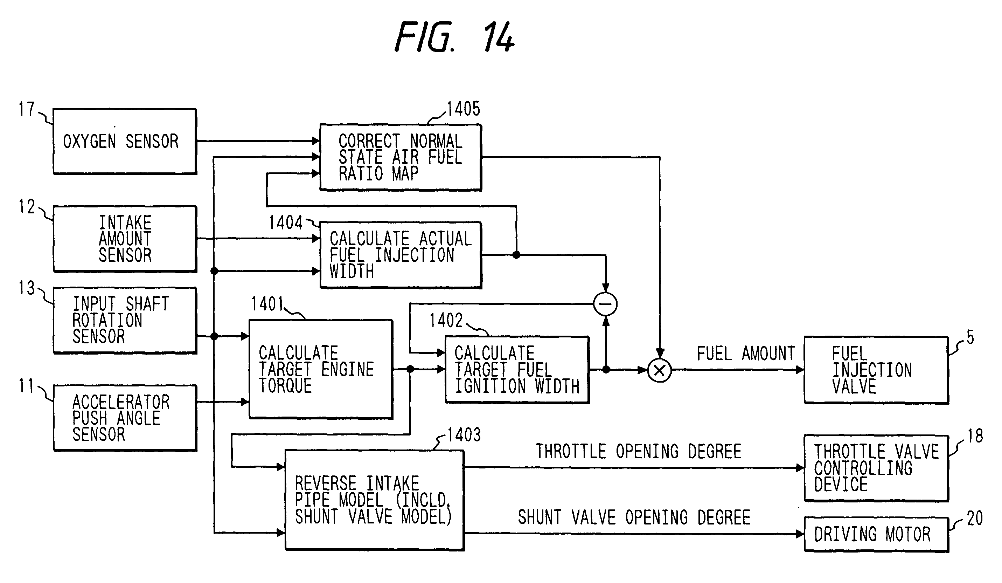

Figure 14 is a block diagram showing a control of preventing shock caused by the change of the air fuel ratio. First, the operation inputs the engine rotation number and the accelerator opening degree to a processing 1401 and calculates the target engine torque required by a driver. Next, in a processing 1402, the operation calculates a target fuel injection width in conformity with the target engine torque. Here, at the same time the operation carries out the calculation using a reverse intake pipe model of a processing 1403 and calculates the air amount (throttle opening degree, opening degree of a shunt valve) in conformity with the target engine torque, that is, in conformity with the target fuel injection width ahd outputs it. Thereby, the target engine torque is set also in changing the air fuel ratio while the accelerator opening degree stays constant and a fuel injection width is retained whereby the air fuel ratio can be changed without torque variation. Further, to carry out the fuel amount control with high accuracy, it is necessary to calculate the actual fuel injection width in a processing 1404 by feeding back the intake amount sensor signal and the engine rotation number to correct the target fuel injection width. Further, in normal state time the operation feeds back signals of the oxygen sensor etc. and corrects the air fuel ratio map in a processing 1405 thereby correcting the target fuel injection width. This fuel retaining control is suitable in changing the air fuel ratio in transient state and normal state.

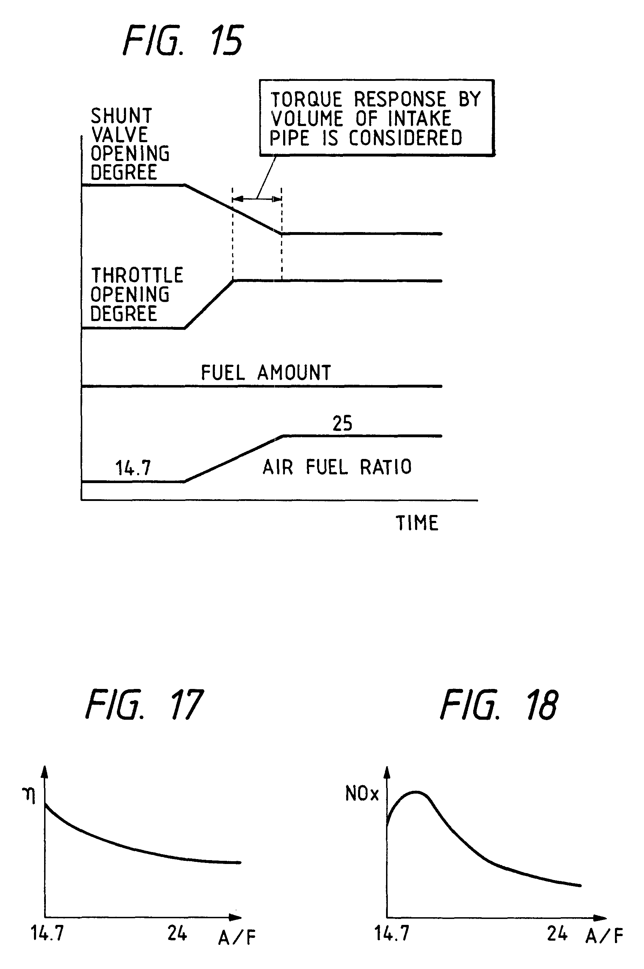

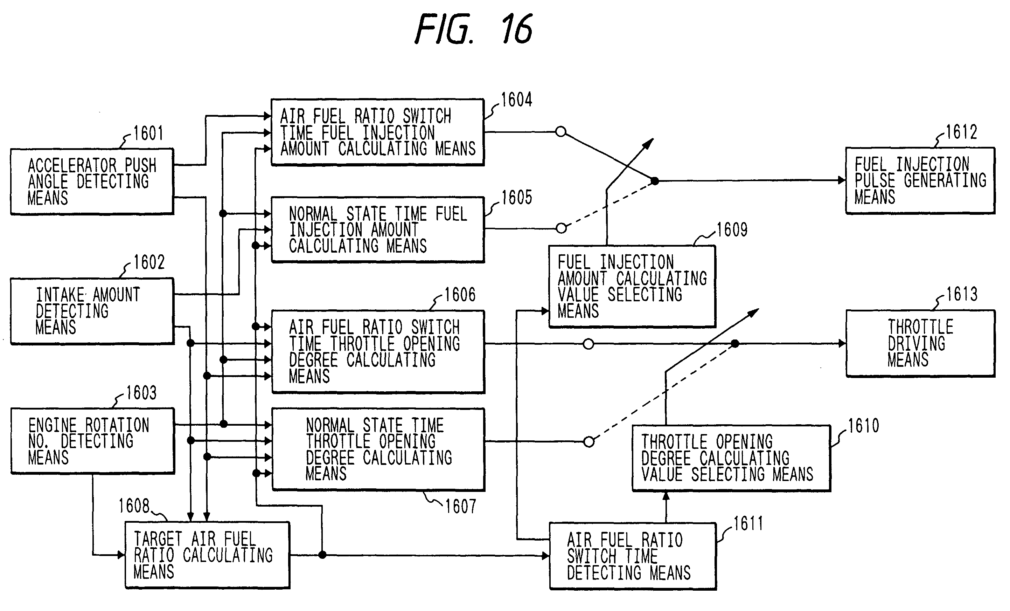

Figure 15 illustrates time charts for explaining the control shown in Figure 14. A positional relationship between the mounting locations of the throttle valve and the shunt valves influences on a relationship between the opening degrees of these valves and the engine torque. As shown in Figure 1, it is necessary to consider inertia of intake flow in a volume of the intake pipe disposed between the throttle control device 18 incorporating the throttle valve and the swirl shunt valves 19. Therefore, there is provided a time lag between the opening degree of the throttle valve and the opening degree of the swirl shunt valves 19 as shown in Figure 15. The opening degrees of these vales are calculated by the calculation in a processing 1403 using the reverse intake pipe model in Figure 14. When the air fuel ratio is changed while the target engine torque stays constant, the air amount is changed by the control shown in Figure 15 while maintaining the fuel amount constant whereby the air fuel ratio can be changed without varying the torque.

As shown in the above embodiments, the present invention provides the output torque control apparatus and its method for a lean burn internal combustion engine without deteriorating the fuel cost, the function of reducing poisonous components in exhaust gas and the operational performance, since the lean burn combustion control can be achieved in conformity with the request of a driver in consideration of aging of component parts of a lean burn internal combustion engine and component parts of the control device.

Figure 16 is a block diagram showing structure of a control. This is an example of a control which restrains variation of the output torque of an engine by controlling the air fuel ratio in a switching operation wherein the air fuel ratio in combustion at a theoretical air fuel ratio is switched to that of lean burn. In Figure 16, a target air fuel ratio calculating means 1608 calculates the target air fuel ratio by being inputted with the accelerator push angle detected by an accelerator push angle detecting means 1601, the intake air amount detected by an intake air amount detecting means 1602 and the engine rotation number detected by an engine rotation number detecting means 1603. An air fuel ratio switch time fuel injection amount calculating means 1604 calculates the fuel injection amount in switching the air fuel ratio by being inputted with the accelerator push angle detected by the accelerator angle detecting means 1601, the engine rotation number detected by the engine rotation number detecting means 1603 and the target air fuel ratio calculated by the target air fuel ratio calculating means 1608. A normal state time fuel injection amount calculating means 1605 calculates the fuel injection amount in a normal state operation by being inputted with the engine rotation number detected by the engine rotation number detecting means 1603, the intake amount detected by the intake amount detecting means 1602 and the target air fuel ratio calculated by the target air fuel ratio calculating means 1608. An air fuel ratio switch time throttle opening degree calculating means 1606 calculates the throttle opening degree in switching the air fuel ratio by being inputted with the target air fuel ratio calculated by the target air fuel ratio calculating means 1608, the intake amount detected by the intake air amount detecting means 1602, the engine rotation number detected by the engine rotation number detecting means 1603 and the accelerator push angle detected by the accelerator push angle detecting means 1601. A normal state time throttle opening degree calculating means 1607 calculates the throttle opening degree in a normal state operation by being inputted with the engine rotation number detected by the engine rotation number detecting means 1603, the intake amount detected by the intake amount detecting means 1602, the accelerator push angle detected by the accelerator push angle detecting means 1601 and the target air fuel ratio calculated by the target air fuel ratio calculating means 1608. An air fuel ratio switch time detecting means 1611 detects the air fuel ratio switch time by being inputted with the target air fuel ratio calculated by the target air fuel ratio calculating means 1608. A fuel injection amount calculating value selecting means 1609 switches the calculated value of the fuel injection by the normal state time fuel injection amount calculating means 1605 to the calculated value of the fuel injection amount by the air fuel ratio switch time fuel injection amount calculating means 1604 in switching the air fuel ratio of which timing is detected by the air fuel ratio switch time detecting means 1611 and switches it back to the calculated value of the fuel injection amount by the normal state time fuel injection amount fuel injection means 1605 when the switching of the air fuel ratio has been finished. A throttle opening degree calculating value selecting means 1610 switches the calculated value of the throttle opening degree by the normal state time throttle opening degree calculating means 1607 to the calculated value of the throttle opening degree by the air fuel ratio switch time throttle opening degree calculating means 1606 in switching the air fuel ratio of which timing is detected by the air fuel ratio switch time detecting means 1611 and switches it back to the calculated value of the throttle opening degree by the normal state time throttle opened degree calculating means 1607 when the switching of the air fuel ratio has been finished. A fuel injection pulse generating means 1612 generates pulses based on the calculated value of the fuel injection amount selected by the fuel injection amount calculating value selecting means 1609. A throttle driving means 1613 drives the throttle based on the calculated value of the throttle opening degree selected by the throttle opening degree calculating value selecting means 1610. Further, in this case, the control of the air amount may be performed not only by the throttle valve but valves for idling speed control (hereinafter, ISC) a supercharger, a turbo for controlling a motor etc.

Figure 17 shows a relationship between the air fuel ratio A/F and the fuel amount and Figure 18 shows a relationship between the air fuel ratio A/F and the emission amount of NOx both when the output of an engine stays the same. Generally, in a lean burn internal combustion engine, the air fuel ratio is switched by decreasing or increasing the fuel injection amount without changing the opening degree of the throttle valve that is, without changing the intake amount. Therefore, in changing the air fuel ratio the output torque of an engine changes which creates shock or strange feeling to a driver or passengers. As a countermeasure thereagaist the air fuel ratio is switched by controlling the air amount by opening and closing the throttle valve while maintaining the fuel injection amount constant in switching the air fuel ratio. However, when the air fuel ratio is made lean while generating the same output, the necessary fuel amount is decreased as shown in Figure 17. Therefore, it is necessary to finely adjust the fuel injection amount to maintain the output torque constant in switching the air fuel ratio. The NOx generating amount has a peak value in a range of the air fuel ratio of 14.7 to 21 through 24 as shown in Figure 18. Therefore, when the switching of the air fuel ratio is performed slowly, the Nox generating amount is increased which deteriorates the function of purifying exhaust gas. Accordingly, the switching of the air fuel ratio must be performed rapidly to decrease the NOx generating amount.

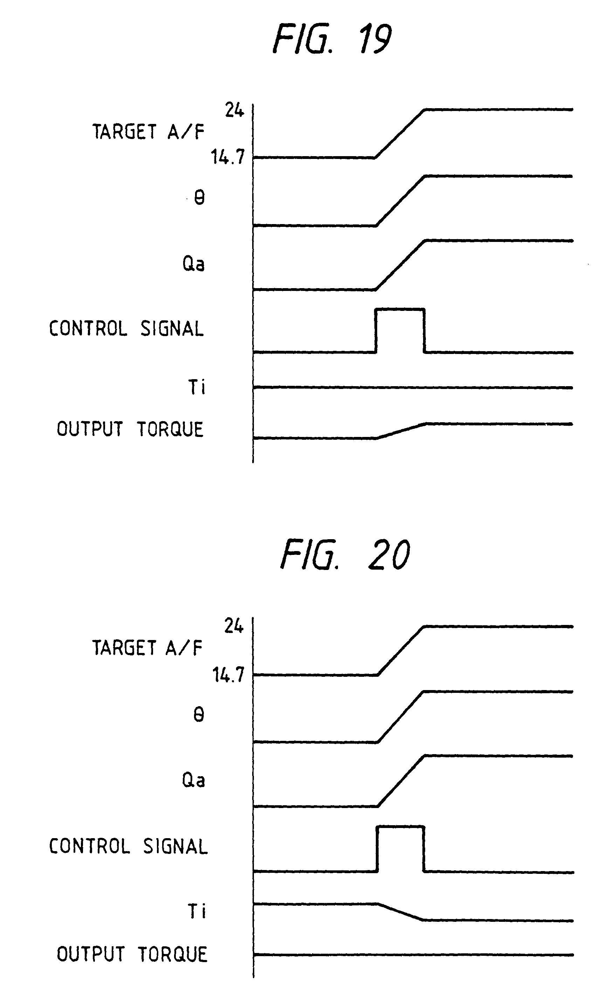

Figure 19 illustrates time charts showing a change of the output torque of an engine when the value of the fuel injection amount Ti is maintained constant in switching the air fuel ratio. In a transient state in which the target air fuel ratio is changed from 14.7 to 24,a control signal is outputted by the air fuel ratio switch time detecting means 1611 in Figure 16 by which methods of calculating control values of the fuel injection amount Ti and the throttle opening degree θ are changed. The throttle opening degree θ changes similar to the target air fuel ratio and the intake amount Qa also changes similar thereto. However, the fuel injection amount Ti is maintained constant. As a result, the output torque is slightly increased by an increase thereof caused due to the lean air fuel ratio. In this way, rapid change of the output torque in switching the air fuel torque is restrained by maintaining constant the fuel injection amount Ti and changing the intake amount Qa and therefore, the switching of the air fuel ratio can be finished in a short period of time and the generation of NOx can be reduced. However, even in case where the fuel injection amount Ti is maintained constant, slight variation of the torque is caused. The small variation of the torque can be restrained by decreasing the fuel injection amount Ti in accordance with the change of the target air fuel ratio and the increase in the generated torque per fuel amount.

Figure 20 illustrates time chart showing change of the output torque when the increase of the output torque of an engine is restrained by slightly changing the fuel injection amount in switching the air fuel ratio. In a transient state in which the target air fuel ratio is changed from 14.7 to 24, a control signal is outputted by the air fuel ratio switch time detecting means 1611 in Figure 16, whereby methods of calculating control values of the fuel injection amount Ti and the throttle opening degree TVO are switched. The throttle opening degree θ changes similar to the target air fuel ratio and the intake amount Qa also changes similar thereto. The fuel injection amount Ti is slightly reduced in accordance with an increase in the target air fuel ratio. Accordingly, the small increase in the output torque is restrained and torque shock or strange feeling can be prevented from occurring even when the air fuel ratio is rapidly changed.

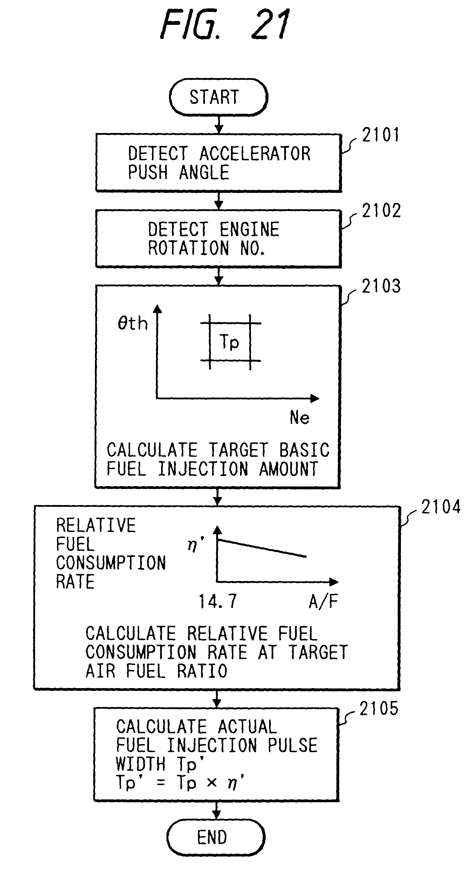

Figure 21 is a flow chart of calculation performed by the air fuel ratio switch time fuel injection amount calculating means 1604 shown in Figure 16. First, in step 2101, the operation detects the accelerator push angle and detects the engine rotation number Ne instep 2102. In step 2103 the operation calculates a target basic fuel injection pulse width Tp by mapping from the engine rotation number Ne and the accelerator push angle th. Next, in step 2104 the operation calculates by mapping a relative fuel consumption rate ' with respect to the target air fuel ratio by setting the fuel consumption rate at the theoretical air fuel ratio of 14.7 as 1. Further, the operation calculates an actual fuel injection pulse width Tp' by the following equation (1) in step 2105.$\text{Tp' = Tp x '}$

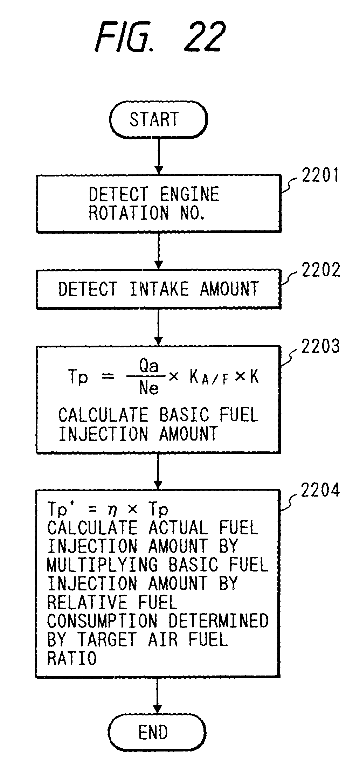

Figure 22 is a flow chart of calculation performed by the normal state time fuel injection amount calculating means 1605 shown in Figure 16. First, the operation detects the engine revolution number Ne in step 2201 and detects the intake amount Qa in step 2202. Further, the operation calculates the basic fuel injection pulse width Tp by the following equation (2) in step 2203.$\text{Tp = Qa/Ne x K A/F x K}$ where K A/F is a constant determined by air fuel ratio and K is a constant having no dependency on the air fuel ratio. Next, in step 2204 the operation calculates the actual fuel injection pulse width Tp' by the following equation (3) by multiplying the basic fuel injection pulse width Tp by the relative fuel consumption rate determined by the target air fuel ratio.$\text{Tp' = x Tp}$

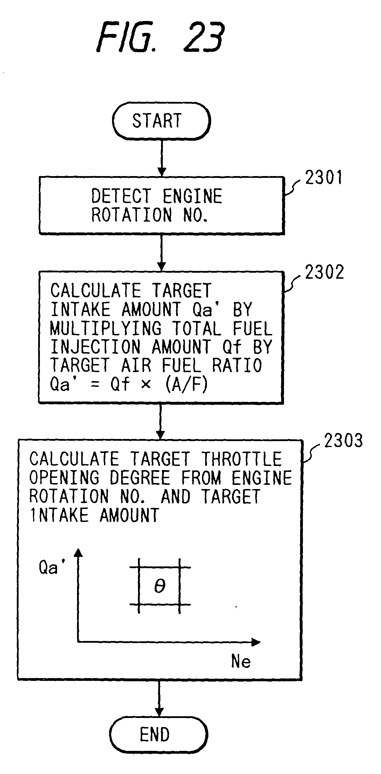

Figure 23 is a flow chart of calculation performed by the air fuel ratio switch throttle opening degree calculating means 1606 shown in Figure 16. First, the operation detects the engine rotation number Ne in step 2301 and calculates the target intake air amount Qa' in step 2303 by the following equation (4) by multiplying a total fuel injection amount Qf by the target air fuel ratio A/F.$\text{Qa' = Qf x (A/F)}$

Further, in step 2303 the operation calculates the target throttle opening degree by mapping from the engine revolution number Ne and the target intake air amount Qa'.

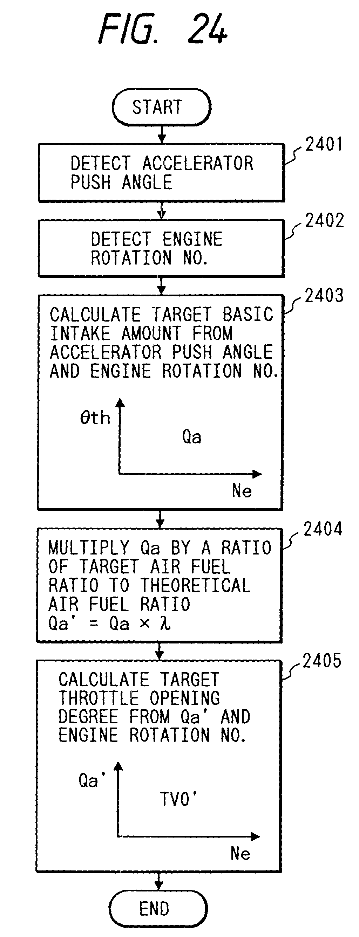

Figure 24 is a flow chart of calculation performed by the normal state time throttle opening degree calculating means 1607. First, the operation detects the accelerator push angle th in step 2401 and detects the engine rotation number Ne in step 2402. Further, instep 2403, the operation calculates the target basic intake amount Qa by mapping from the accelerator push angle th and the engine rotation number Ne. Next, in step 2404, the operation calculates a target intake amount Qa' by multiplying the target basic intake amount Qa by a ratio of the target air fuel ratio to the theoretical air fuel ratio.$\text{Qa' = Qa x}$

Further, the operation calculates a target throttle opening degree TVO' by mapping from the target intake amount Qa' and the engine rotation number Ne.

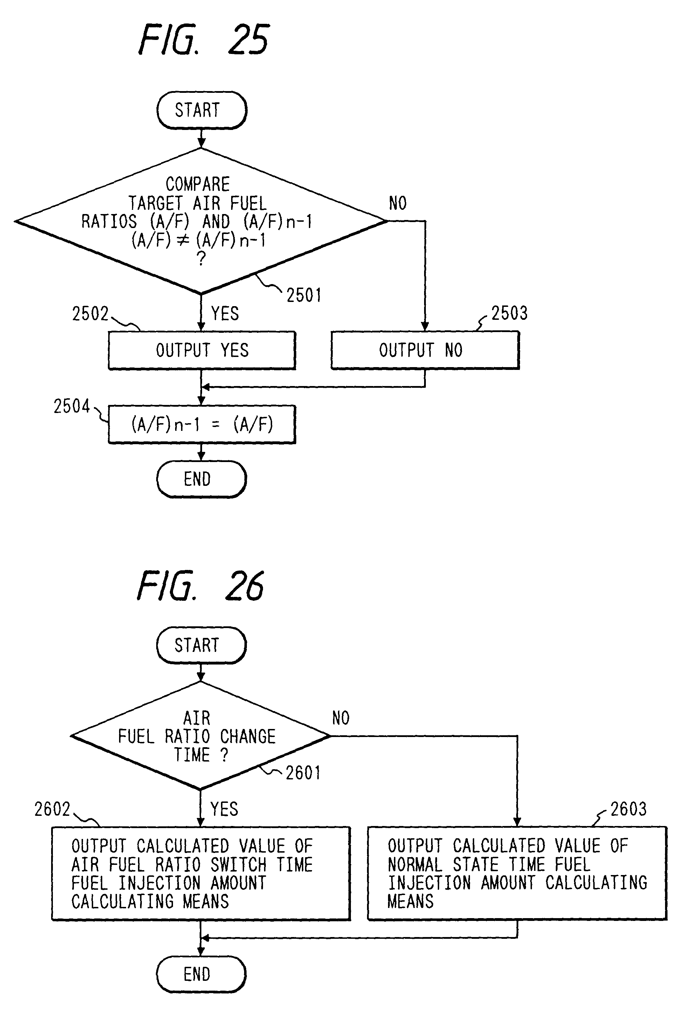

Figure 25 is a flow chart of calculation performed by the air fuel ratio switch time detecting means 1611 shown in Figure 16. In step 2501, the operation compares a current target air fuel ratio with a preceding target air fuel ratio and checks whether the target air fuel ratio has been switched. If the target air fuel ratio has been switched, the operation proceeds to step 2502 and proceeds to step 2503 when it has not been switched. In step 2502 the operation outputs Yes and outputs No in step 2503. Further, in step 2504, the operation is finished when the current target air fuel ratio is equal to the preceding target air fuel ratio.

Figure 26 is a flow chart of calculation of performed by the fuel injection amount calculating value selecting means 1609 shown in Figure 16. In step 2601, the operation checks whether the air fuel ratio is to be switched. When the air fuel ratio is to be switched, the operation proceeds to step 2602 and proceeds to step 2603 if not. In step 2602, the operation outputs the calculated value of the air fuel ratio switch time fuel injection amount calculating means 1604. In step 2603, the operation outputs the calculated value of the normal state time fuel injection amount calculating means 1605.

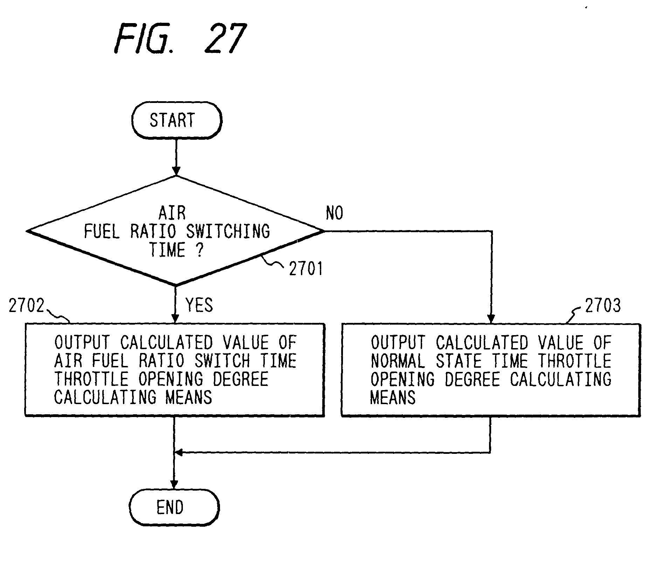

Figure 27 is a flow chart of calculation performed by the throttle opening degree calculating value selecting means 1610 shown in Figure 16. In step 2701, the operation checks whether the air fuel ratio is to be switched. When the air fuel ratio is to be switched, the operation proceeds to step 2702 and proceeds to step 2703 if not. I step 2702, the operation outputs the calculated value of the air fuel ratio switch time throttle opening degree calculating means 1606 and in step 2703, the operation outputs the calculated value of the normal state time throttle opening degree calculating means 1607.

As stated above, according to the present invention, stepwise change of torque or shock in switching the air fuel ratio is restrained as less as possible, the air fuel ratio can be switched rapidly and the emission amount of NOx can be reduced

## Claims

1. An apparatus of controlling an output torque for an internal combustion engine including an air fuel ratio controlling means for controlling an air fuel ratio of the internal combustion engine characterized by a lean limit air fuel ratio determining means for determining a lean limit air fuel ratio by detecting a variation of the output torque of the internal combustion engine and a limit air fuel ratio comparing means for comparing a limit air fuel ratio corresponding to a predetermined amount with respect to an emission amount of a nitrogen oxide component in an exhaust gas from the internal combustion engine with the lean limit air fuel ratio, the air fuel ratio controlling means controlling the air fuel ratio based on a result of the comparison.

2. An apparatus of controlling an output torque for an internal combustion engine according to Claim 1, wherein the air fuel ratio controlling means further comprises a target air fuel ratio learning means for detecting a theoretical air fuel ratio by using an oxygen sensor and learning a target air fuel ratio in an operating region of the theoretical air fuel ratio based on the theoretical air fuel ratio and a target air fuel ratio correcting means for correcting the target air fuel ratio of a lean mixture by using a value of the learnt air fuel ratio learnt by the target air fuel ratio learning means.

3. An apparatus of controlling an output torque for an internal combustion engine according to Claim 2, wherein the air fuel ratio controlling means further comprises a target air fuel ratio data changing means for expressing the target air fuel ratio as data and writing the changed target air fuel ratio data when the target air fuel ratio data is changed.

4. An apparatus of controlling an output torque for an internal combustion engine according to Claim 1, wherein the air fuel ratio controlling means further comprises a torque correcting means for correcting the output torque of the internal combustion engine.

5. An apparatus of controlling an output torque for an internal combustion engine according to Claim 4, wherein an amount corrected by the torque correcting means is an air amount to be sucked into the internal combustion engine.

6. An apparatus of controlling an output torque for an internal combustion engine according to Claim 4, wherein an amount corrected by the torque correcting means is an ignition timing.

7. An apparatus of controlling an output torque for an internal combustion engine according to Claim 4, wherein amounts corrected by the torque correcting means are an air amount to be sucked into the internal combustion engine and an ignition timing.

8. An apparatus of controlling an output torque for an internal combustion engine according to Claim 7, wherein the air amount is corrected after the ignition timing has been corrected.

9. An apparatus of controlling an output torque for an internal combustion engine according to Claim 1 further comprising a target torque calculating means for calculating a target torque which is a target value of the control of the output torque of the internal combustion engine and a target fuel injection width calculating means for determining a target fuel amount in accordance with a value of the target torque.

10. An apparatus of controlling an output torque for an internal combustion engine according to Claim 9 further comprising an air amount calculating means for forming a model of a function characteristic of an intake pipe of the internal combustion engine and calculating an air amount to be sucked into the internal combustion engine based on the target torque and the target fuel amount by using the model.

11. A method of controlling an output torque for an internal combustion engine **characterised in that** an air fuel ratio controlling means controls an air fuel ratio of the internal combustion engine, a lean limit air fuel ratio determining means determines a lean limit air fuel ratio by detecting a variation of the output torque of the internal combustion engine, a limit air fuel ratio comparing means compares a limit air fuel ratio corresponding to a predetermined amount with respect to an exhaust amount of a nitrogen oxide component in an emission gas from the internal combustion engine with the lean limit air fuel ratio and the air fuel ratio controlling means controls the air fuel ratio based on a result of the comparison.

12. A method of controlling an output torque for an internal combustion engine according to Claim 11, wherein the air fuel ratio controlling means further comprises a target air fuel ratio learning means for detecting a theoretical air fuel ratio by using an oxygen sensor and learning a target air fuel ratio in an operating region of the theoretical air fuel ratio based on the theoretical air fuel ratio and a target air fuel ratio correcting means for correcting the target air fuel ratio of a lean mixture by using a value of the learnt air fuel ratio learnt by the target air fuel ratio learning means.

13. A method of controlling an output torque for an internal combustion engine according to Claim 12, wherein the air fuel ratio controlling means further comprises a target air fuel ratio data changing means for expressing the air fuel ratio as a data and writing a changed target air fuel ratio data when the target air fuel ratio data is changed.

14. A method of controlling an output torque for an internal combustion engine according to Claim 11, wherein the air fuel ratio controlling means further comprises a torque correcting means for correcting the output torque of the internal combustion engine.

15. A method of controlling an output torque for an internal combustion engine according to Claim 14, wherein an amount corrected by the torque correcting means is an air amount to be sucked into the internal combustion engine.

16. A method of controlling an output torque for an internal combustion engine according to Claim 14, wherein an amount corrected by the torque correcting means is an ignition timing.

17. A method of controlling an output torque for an internal combustion engine according to Claim 14, wherein amounts corrected by the torque correcting means are an air amount to be sucked into the internal combustion engine and an ignition timing.

18. A method of controlling an output torque for an internal combustion engine according to Claim 17, wherein the air amount is corrected after the ignition timing has been corrected.

19. A method of controlling an output torque for an internal combustion engine according to Claim 11, further comprising a target torque calculating means for calculating a target torque which is a target value of the control of the output torque of the internal combustion engine and a target fuel injection width calculating means for determining a target fuel amount in accordance with a value of the target torque.

20. A method of controlling an output torque for an internal combustion engine according to Claim 19, urther comprising an air amount calculating means for forming a model of a function characteristic of the internal combustion engine and calculating an air amount sucked into the internal combustion engine based on the target torque and the target fuel amount by using the model.

## Patentansprüche

1. Vorrichtung zum Steuern des Ausgangsdrehmoments einer Brennkraftmaschine mit einer Steuerungseinrichtung für das Luft-Kraftstoff-Verhältnis zur Steuerung des Luft-Kraftstoff-Verhältnisses der Brennkraftmaschine, gekennzeichnet durch eine Bestimmungseinrichtung für eine Luft-Kraftstoff-Verhältnis-Magergrenze zur Bestimmung des Magergrenzen-Luft-Kraftstoff-Verhältnisses durch das Erkennen einer Abweichung des Ausgangsdrehmoments der Brennkraftmaschine, und mit einer Luft-Kraftstoff-Verhältnis-Grenzwert-Vergleichseinrichtung zum Vergleichen eines Grenzwert-Luft-Kraftstoff-Verhältnisses, das einem vorbestimmten Wert im Verhältnis zu einem Abgabewert einer Stickstoffoxidkomponente in den Abgasen der Brennkraftmaschine entspricht, mit dem Magergrenzen-Luft-Kraftstoff-Verhältnis, wobei die Steuerungseinrichtung für das Luft-Kraftstoff-Verhältnis das Luft-Kraftstoff-Verhältnis auf der Basis des Ergebnisses des Vergleichs steuert.

2. Vorrichtung zum Steuern des Ausgangsdrehmoments einer Brennkraftmaschine nach Anspruch 1, wobei die Steuerungseinrichtung für das Luft-Kraftstoff-Verhältnis ferner eine Lerneinrichtung für das Ziel-Luft-Kraftstoff-Verhältnis umfasst, die dazu dient, ein theoretisches Luft-Kraftstoff-Verhältnis unter Verwendung eines Sauerstoffsensors zu erfassen und ein Ziel-Luft-Kraftstoff-Verhältnis in einem Betriebsbereich des theoretischen Luft-Kraftstoff-Verhältnisses auf der Basis des theoretischen Luft-Kraftstoff-Verhältnisses zu lernen, und mit einer Berichtigungseinrichtung für das Ziel-Luft-Kraftstoff-Verhältnis zur Berichtigung des Ziel-Luft-Kraftstoff-Verhältnisses eines mageren Gemischs unter Verwendung des Wertes des gelernten Luft-Kraftstoff-Verhältnisses, das durch die Lerneinrichtung für das Ziel-Luft-Kraftstoff-Verhältnis gelernt worden ist.

3. Vorrichtung zum Steuern des Ausgangsdrehmoments einer Brennkraftmaschine nach Anspruch 2, wobei die Steuerungseinrichtung für das Luft-Kraftstoff-Verhältnis ferner eine Datenveränderungseinrichtung für das Ziel-Luft-Kraftstoff-Verhältnis zum Ausdrücken des Ziel-Luft-Kraftstoff-Verhältnisses als Daten umfasst, und wobei die geänderten Ziel-Luft-Kraftstoff-Verhältnis-Daten geschrieben werden, wenn die Ziel-Luft-Kraftstoff-Verhältnis-Daten geändert werden.

4. Vorrichtung zum Steuern des Ausgangsdrehmoments einer Brennkraftmaschine nach Anspruch 1, wobei die Steuerungseinrichtung für das Luft-Kraftstoff-Verhältnis ferner eine Drehmoment-Berichtigungseinrichtung umfasst, die dazu dient, das Ausgangsdrehmoment der Brennkraftmaschine zu berichtigen.

5. Vorrichtung zum Steuern des Ausgangsdrehmoments einer Brennkraftmaschine nach Anspruch 4, wobei es sich bei einem durch die Drehmoment-Berichtigungseinrichtung berichtigten Wert um eine Luftmenge handelt, die in die Brennkraftmaschine gesaugt wird.

6. Vorrichtung zum Steuern des Ausgangsdrehmoments einer Brennkraftmaschine nach Anspruch 4, wobei es sich bei einem durch die Drehmoment-Berichtigungseinrichtung berichtigten Wert um eine Zündzeitpunktverstellung handelt.

7. Vorrichtung zum Steuern des Ausgangsdrehmoments einer Brennkraftmaschine nach Anspruch 4, wobei es sich bei den durch die Drehmoment-Berichtigungseinrichtung berichtigten Werten um eine in die Brennkraftmaschine gesaugte Luftmenge und um eine Zündzeitpunktverstellung handelt.

8. Vorrichtung zum Steuern des Ausgangsdrehmoments einer Brennkraftmaschine nach Anspruch 7, wobei die Luftmenge nach der Berichtigung der Zündzeitpunktverstellung berichtigt wird.

9. Vorrichtung zum Steuern des Ausgangsdrehmoments einer Brennkraftmaschine nach Anspruch 1, wobei die Vorrichtung ferner eine Zieldrehmoment-Berechnungseinrichtung zur Berechnung des Zieldrehmoments umfasst, bei dem es sich um einen Zielwert für die Steuerung des Ausgangsdrehmoments der Brennkraftmaschine handelt, und mit einer Ziel-Kraftstoffeinspritzbreiten-Berechnungseinrichtung zur Bestimmung einer Ziel-Kraftstoffmenge gemäß einem Wert des Zieldrehmoments.

10. Vorrichtung zum Steuern des Ausgangsdrehmoments einer Brennkraftmaschine nach Anspruch 9, wobei die Vorrichtung ferner eine Luftmengen-Berechnungseinrichtung umfasst, die ein Modell eines Funktionsmerkmals einer Ansaugleitung der Brennkraftmaschine bildet und eine Luftmenge berechnet, die auf der Basis des Zieldrehmoments und der Ziel-Kraftstoffmenge unter Verwendung des Modells in die Brennkraftmaschine gesaugt wird.

11. Verfahren zum Steuern des Ausgangsdrehmoments einer Brennkraftmaschine, **dadurch gekennzeichnet**, dass eine Steuerungseinrichtung für das Luft-Kraftstoff-Verhältnis das Luft-Kraftstoff-Verhältnis der Brennkraftmaschine steuert, wobei eine Bestimmungseinrichtung für eine Luft-Kraftstoff-Verhältnis-Magergrenze ein Magergrenzen-Luft-Kraftstoff-Verhältnis durch das Erkennen einer Abweichung des Ausgangsdrehmoments der Brennkraftmaschine bestimmt, wobei eine Luft-Kraftstoff-Verhältnis-Grenzwert-Vergleichseinrichtung ein Grenzwert-Luft-Kraftstoff-Verhältnis, das einem vorbestimmten Wert im Verhältnis zu einem Abgabewert einer Stickstoffoxidkomponente in den Abgasen der Brennkraftmaschine entspricht, mit dem Magergrenzen-Luft-Kraftstoff-Verhältnis vergleicht, und wobei die Steuerungseinrichtung für das Luft-Kraftstoff-Verhältnis das Luft-Kraftstoff-Verhältnis auf der Basis des Ergebnisses des Vergleichs steuert.

12. Verfahren zum Steuern des Ausgangsdrehmoments einer Brennkraftmaschine nach Anspruch 11, wobei die Steuerungseinrichtung für das Luft-Kraftstoff-Verhältnis ferner eine Lerneinrichtung für das Ziel-Luft-Kraftstoff-Verhältnis umfasst, die dazu dient, ein theoretisches Luft-Kraftstoff-Verhältnis unter Verwendung eines Sauerstoffsensors zu erfassen und ein Ziel-Luft-Kraftstoff-Verhältnis in einem Betriebsbereich des theoretischen Luft-Kraftstoff-Verhältnisses auf der Basis des theoretischen Luft-Kraftstoff-Verhältnisses zu lernen, und mit einer Berichtigungseinrichtung für das Ziel-Luft-Kraftstoff-Verhältnis zur Berichtigung des Ziel-Luft-Kraftstoff-Verhältnisses eines mageren Gemischs unter Verwendung des Wertes des gelernten Luft-Kraftstoff-Verhältnisses, das durch die Lerneinrichtung für das Ziel-Luft-Kraftstoff-Verhältnis gelernt worden ist.

13. Verfahren zum Steuern des Ausgangsdrehmoments einer Brennkraftmaschine nach Anspruch 12, wobei die Steuerungseinrichtung für das Luft-Kraftstoff-Verhältnis ferner eine Datenveränderungseinrichtung für das Ziel-Luft-Kraftstoff-Verhältnis zum Ausdrücken des Ziel-Luft-Kraftstoff-Verhältnisses als Daten umfasst, und wobei die geänderten Ziel-Luft-Kraftstoff-Verhältnis-Daten geschrieben werden, wenn die Ziel-Luft-Kraftstoff-Verhältnis-Daten geändert werden.

14. Verfahren zum Steuern des Ausgangsdrehmoments einer Brennkraftmaschine nach Anspruch 11, wobei die Steuerungseinrichtung für das Luft-Kraftstoff-Verhältnis ferner eine Drehmoment-Berichtigungseinrichtung umfasst, die dazu dient, das Ausgangsdrehmoment der Brennkraftmaschine zu berichtigen.

15. Verfahren zum Steuern des Ausgangsdrehmoments einer Brennkraftmaschine nach Anspruch 14, wobei es sich bei einem durch die Drehmoment-Berichtigungseinrichtung berichtigten Wert um eine Luftmenge handelt, die in die Brennkraftmaschine gesaugt wird.

16. Verfahren zum Steuern des Ausgangsdrehmoments einer Brennkraftmaschine nach Anspruch 14, wobei es sich bei einem durch die Drehmoment-Berichtigungseinrichtung berichtigten Wert um eine Zündzeitpunktverstellung handelt.

17. Verfahren zum Steuern des Ausgangsdrehmoments einer Brennkraftmaschine nach Anspruch 14, wobei es sich bei den durch die Drehmoment-Berichtigungseinrichtung berichtigten Werten um eine in die Brennkraftmaschine gesaugte Luftmenge und um eine Zündzeitpunktverstellung handelt.

18. Verfahren zum Steuern des Ausgangsdrehmoments einer Brennkraftmaschine nach Anspruch 17, wobei die Luftmenge nach der Berichtigung der Zündzeitpunktverstellung berichtigt wird.

19. Verfahren zum Steuern des Ausgangsdrehmoments einer Brennkraftmaschine nach Anspruch 11, wobei die Vorrichtung ferner eine Zieldrehmoment-Berechnungseinrichtung zur Berechnung des Zieldrehmoments umfasst, bei dem es sich um einen Zielwert für die Steuerung des Ausgangsdrehmoments der Brennkraftmaschine handelt, und mit einer Ziel-Kraftstoffeinspritzbreiten-Berechnungseinrichtung zur Bestimmung einer Ziel-Kraftstoffmenge gemäß einem Wert des Zieldrehmoments.

20. Verfahren zum Steuern des Ausgangsdrehmoments einer Brennkraftmaschine nach Anspruch 19, wobei die Vorrichtung ferner eine Luftmengen-Berechnungseinrichtung umfasst, die ein Modell eines Funktionsmerkmals einer Ansaugleitung der Brennkraftmaschine bildet und eine Luftmenge berechnet, die auf der Basis des Zieldrehmoments und der Ziel-Kraftstoffmenge unter Verwendung des Modells in die Brennkraftmaschine gesaugt wird.

## Revendications

1. Dispositif destiné à commander un couple de sortie d'un moteur à combustion interne comprenant un moyen de commande de rapport air carburant afin de commander un rapport air carburant du moteur à combustion interne, caractérisé par un moyen de détermination de rapport air carburant limite pauvre destiné à déterminer un rapport air carburant limite pauvre en détectant une variation du couple de sortie du moteur à combustion interne et un moyen de comparaison de rapport air carburant limite destiné à comparer un rapport air carburant limite correspondant à une valeur prédéterminée par rapport à une quantité d'émission d'un composant à base d'oxyde d'azote dans des gaz d'échappement provenant du moteur à combustion interne, avec le rapport air carburant limite pauvre, le moyen de commande de rapport air carburant commandant le rapport air carburant en fonction du résultat de la comparaison.

2. Dispositif destiné à commander un couple de sortie d'un moteur à combustion interne selon la revendication 1, dans lequel le moyen de commande de rapport air carburant comprend, en outre, un moyen d'apprentissage de rapport air carburant cible destiné à détecter un rapport air carburant théorique en utilisant un capteur d'oxygène et enregistrant un rapport air carburant cible dans une zone de fonctionnement du rapport air carburant théorique en fonction du rapport air carburant théorique et un moyen de correction de rapport air carburant cible destiné à corriger le rapport air carburant cible d'un mélange pauvre en utilisant une valeur du rapport air carburant enregistré, déterminée par le moyen d'apprentissage de rapport air carburant cible.

3. Dispositif destiné à commander un couple de sortie d'un moteur à combustion interne selon la revendication 2, dans lequel le moyen de commande de rapport air carburant comprend, en outre, un moyen de modification de données de rapport air carburant cible afin d'exprimer le rapport air carburant cible sous forme numérique et d'écrire les données de rapport air carburant cible modifiées lorsque les données de rapport air carburant cible sont modifiées.

4. Dispositif destiné à commander un couple de sortie d'un moteur à combustion interne selon la revendication 1, dans lequel le moyen de commande de rapport air carburant comprend, en outre, un moyen de correction de couple destiné corriger le couple de sortie du moteur à combustion interne.

5. Dispositif destiné à commander un couple de sortie d'un moteur à combustion interne selon la revendication 4, dans lequel une grandeur corrigée par le moyen de correction de couple est une quantité d'air à aspirer dans le moteur à combustion interne.

6. Dispositif destiné à commander un couple de sortie d'un moteur à combustion interne selon la revendication 4, dans lequel une grandeur corrigée par le moyen de correction de couple est une séquence d'allumage.

7. Dispositif destiné à commander un couple de sortie d'un moteur à combustion interne selon la revendication 4, dans lequel des grandeurs corrigées par le moyen de correction de couple sont une quantité d'air à aspirer dans le moteur à combustion interne et une séquence d'allumage.

8. Dispositif destiné à commander un couple de sortie d'un moteur à combustion interne selon la revendication 7, dans lequel la quantité d'air est corrigée après que la séquence d'allumage a été corrigée.

9. Dispositif destiné à commander un couple de sortie d'un moteur à combustion interne selon la revendication 1, comprenant, en outre, un moyen de calcul de couple cible destiné à calculer un couple cible qui est une valeur cible de la commande du couple de sortie du moteur à combustion interne et un moyen de calcul de durée d'injection de carburant cible destiné à déterminer une quantité de carburant cible en fonction d'une valeur du couple cible.

10. Dispositif destiné à commander un couple de sortie d'un moteur à combustion interne selon la revendication 9, comprenant, en outre, un moyen de calcul de quantité d'air destiné à former un modèle d'une fonction caractéristique d'un conduit d'admission du moteur à combustion interne et à calculer une quantité d'air à aspirer dans le moteur à combustion interne en fonction du couple cible et de la quantité de carburant cible en utilisant le modèle.

11. Procédé de commande d'un couple de sortie d'un moteur à combustion interne, **caractérisé en ce qu**'un moyen de commande de rapport air carburant commande un rapport air carburant du moteur à combustion interne, un moyen de détermination de rapport air carburant limite pauvre détermine un rapport air carburant limite pauvre en détectant une variation du couple de sortie du moteur à combustion interne, un moyen de comparaison de rapport air carburant limite compare un rapport air carburant limite correspondant à une quantité prédéterminée par rapport à une quantité d'émission d'un composant à base d'oxyde d'azote dans des gaz d'émission provenant du moteur à combustion interne, avec le rapport air carburant limite pauvre et en ce que le moyen de commande de rapport air carburant commande le rapport air carburant en fonction du résultat de la comparaison.

12. Procédé de commande d'un couple de sortie d'un moteur à combustion interne selon la revendication 11, dans lequel le moyen de commande de rapport air carburant comprend, en outre, un moyen d'apprentissage de rapport air carburant cible destiné à détecter un rapport air carburant théorique en utilisant un capteur d'oxygène et enregistrant un rapport air carburant cible dans une zone de fonctionnement du rapport air carburant théorique en fonction du rapport air carburant théorique et un moyen de correction de rapport air carburant cible destiné à corriger le rapport air carburant cible d'un mélange pauvre en utilisant une valeur du rapport air carburant enregistré, déterminée par le moyen d'apprentissage de rapport air carburant cible.

13. Procédé de commande d'un couple de sortie d'un moteur à combustion interne selon la revendication 12, dans lequel le moyen de commande de rapport air carburant comprend, en outre, un moyen de modification de données de rapport air carburant cible afin d'exprimer le rapport air carburant cible sous forme numérique et d'écrire des données de rapport air carburant cible modifiées lorsque les données de rapport air carburant cible sont modifiées.

14. Procédé de commande d'un couple de sortie d'un moteur à combustion interne selon la revendication 11, dans lequel le moyen de commande de rapport air carburant comprend, en outre, un moyen de correction de couple destiné corriger le couple de sortie du moteur à combustion interne.

15. Procédé de commande d'un couple de sortie d'un moteur à combustion interne selon la revendication 14, dans lequel une grandeur corrigée par le moyen de correction de couple est une quantité d'air à aspirer dans le moteur à combustion interne.

16. Procédé de commande d'un couple de sortie d'un moteur à combustion interne selon la revendication 14, dans lequel une grandeur corrigée par le moyen de correction de couple est une séquence d'allumage.

17. Procédé de commande d'un couple de sortie d'un moteur à combustion interne selon la revendication 14, dans lequel des grandeurs corrigées par le moyen de correction de couple sont une quantité d'air à aspirer dans le moteur à combustion interne et une séquence d'allumage.

18. Procédé de commande d'un couple de sortie d'un moteur à combustion interne selon la revendication 17, dans lequel la quantité d'air est corrigée après que la séquence d'allumage a été corrigée.

19. Procédé de commande d'un couple de sortie d'un moteur à combustion interne selon la revendication 11, comprenant, en outre, un moyen de calcul de couple cible destiné à calculer un couple cible qui est une valeur cible de la commande du couple de sortie du moteur à combustion interne et un moyen de calcul de durée d'injection de carburant cible destiné à déterminer une quantité de carburant cible en fonction d'une valeur du couple cible.

20. Procédé de commande d'un couple de sortie d'un moteur à combustion interne selon la revendication 19, comprenant, en outre, un moyen de calcul de quantité d'air destiné à former un modèle d'une fonction caractéristique du moteur à combustion interne et à calculer une quantité d'air aspirée dans le moteur à combustion interne en fonction du couple cible et de la quantité de carburant cible en utilisant le modèle.
